# EUROPÄISCHE PATENTANMELDUNG

(11) **EP 0 996 268 A2**
(43) Veröffentlichungstag der Anmeldung: **26.04.2000**
(21) Anmeldenummer: 99119977.9
(22) Anmeldetag: 13.10.1999
(51) Int. Cl.: H04M 1/00, H04M 3/42, H04Q 3/00, H04M 7/00, H04M 15/00

(54) **Kommunikationsagent zur Auswahl geeigneter Kommunikationsparameter**

(30) Priorität: 23.10.1998 DE 19848975
(71) Anmelder: SIEMENS AKTIENGESELLSCHAFT, 80333 München (DE)
(72) Erfinder: Remmele, Werner, 86415 Mering (DE); Schmiedel, Gabriele, 83627 Warngau (DE)

(57) **Zusammenfassung**

Beschrieben wird eine Kommunikationsagenteneinheit (KAE) mit Zugriffsmöglichkeit auf ein Gebührenberechnungsmodul (CHARGE)und ein Uhrzeitmodul (TD). Die Kommunikationsagenteneinheit (KAE) hat eine Prozessorsteuerung (CPU), die das Kommunikationsverhalten eines Teilnehmers, dem die Kommunikationsagenteneinheit (KAE) zugeordnet ist, beobachtet und Regelmäßigkeiten durch Vergleichen von Kommunikationsparametern dieses Teilnehmers erfaßt. Wenn durch Änderung von vom Teilnehmer festlegbaren Kommunikationsparametern eine Verbesserung der Kommunikationsbedingungen erreichbar ist, werden dem Teilnehmer die erforderlichen Parameteränderungsmaßnahmen mitgeteilt.

## Beschreibung

Einfache Kommunikationsagenteneinheiten, beispielsweise in Form von Wahlhilfeeinrichtungen, die auf ein Kommunikationspartner-Verzeichnismodul und gegebenenfalls ein Uhrzeit-/Terminkalendermodul zurückgreifen, sind unter anderem als Zusatzeinrichtungen zu Endgeräten bei privaten Nebenstellenanlagen bekannt. Auch firmeninterne Mitarbeiterdateiprogramme, die von an ein Datennetz angeschlossenen Computerendgeräten bereitgestellt werden, erfüllen ähnliche Funktionen. Solche Kommunikationsagenteneinheiten ermöglichen das Auffinden des Datensatzes eines Kommunikationspartners unter einer Vielzahl von Datensätzen eines Kommunikationspartner-Verzeichnismoduls. Diese bekannten Kommunikationsagenteneinheiten erleichtern aufgrund der Zugriffsmöglichkeiten auf eine umfangreiche Datenbank und aufgrund einer menügesteuerten Benutzeroberfläche das Veranlassen eines Verbindungsaufbaus zu einem ausgewählten Kommunikationspartner. Gegebenenfalls kann ein Terminkalendermodul einer solchen Kommunikationsagenteneinheit den Benutzer auf seine Veranlassung hin an einen Termin erinnern.

Insbesondere in privaten Nebenstellenanlagen und Firmennetzen werden sogenannte "Least-Cost-Routing-Einrichtungen" zum Routing von Verbindungen, d.h. zum Festlegen der Streckenführung, und gegebenenfalls zum Auswählen eines Diensteanbieters verwendet. Solche Least-Cost-Routing-Einrichtungen wählen abhängig von der Netzadresse, z.B. der E.164-Netzadresse, eines gerufenen Teilnehmers beispielsweise den Netzübergang von einem Firmennetz in ein öffentliches Netz nach Kostengesichtspunkten aus. Hierbei wird in vielen Fällen die Kommunikationswegführung innerhalb des Firmennetzes möglichst für lange Strecken bzw. für kostenintensive, ggf. internationale Netzübergänge verwendet, so daß die an einen externen Kommunikationsdiensteanbieter zu zahlende Gebühr möglichst gering ist. Falls ein Kommunikationsnetz bwz. eine private Nebenstellenanlage, die eine solche Least-Cost-Routing-Einrichtung enthält, an mehrere Kommunikationsnetze, beispielsweise an Mobilfunknetze unterschiedlicher Netzanbieter und/oder an ein ISDN-Netz angeschlossen ist, wählt die Least-Cost-Routing-Einrichtung abhängig von der Rufnummer eines zu rufenden Kommunikationspartners auch den Diensteanbieter bzw. das Kommunikationsnetz aus, über das ein abgehender Ruf geführt werden soll. Lassen beispielsweise die Anfangsziffern eines gerufenen Kommunikationspartners erkennen, daß das gerufene Endgerät dieses Kommunikationspartners ein Mobilfunknetz eines Mobilfunknetzbetreibers ist, zu dem die private Nebenstellenanlage bzw. das Firmennetz unmittelbaren Zugang haben, so wird der gehende Ruf über dieses Netz geführt, und es wird eine gebührengünstige, mobilfunknetzinterne Verbindung aufgebaut.

Weiterhin sind einfache Kommunikationsagenteneinheiten zum Auswählen des jeweils günstigsten Kommunikationsdiensteanbieters unter anderem unter dem Namen "Call Manager" und "Call Captain" bekannt, die im Internet unter der Adresse http://www.CallManage.com/ mit den Untertiteln about.html, howitworks.html und faq.html beschrieben sind. Eine solche Kommunikationsagenteneinheit ist durch einen Personal Computer (PC) mit einer Navigationssoftware und einem Gebührenberechnungssoftwaremodul sowie einem Uhrzeitmodul realisiert und zwischen die Kommunikationseinrichtung des Benutzers und das Kommunikationsnetz geschaltet. Die Kommunikationsagenteneinheit wählt abhängig von der vom Benutzer eingegebenen Netzadresse, z.B. der E.164-Netzadresse, eines gewünschten Kommunikationspartners unter Berücksichtigung der Gebührenstruktur mehrerer Diensteanbieter den günstigsten Diensteanbieter aus und veranlaßt einen Verbindungsaufbau unter Einbeziehen dieses günstigsten Diensteanbieters.

Die beschriebenen bekannten Kommunikationsagenteneinheiten haben gemeinsam, daß sie vom Benutzer unabhängige Kommunikationsparameter oder den Ort eines Netzüberganges festlegen. Das Kommunikationsverhalten des Benutzers, also des Teilnehmers, dem die Kommunikationsagenteneinheit jeweils zugeordnet ist, wird in keiner Weise berücksichtigt oder gar beeinflußt.

Aufgabe der vorliegenden Erfindung ist es, eine Kommunikationsagenteneinheit mit Zugriffsmöglichkeit auf ein Gebührenberechnungsmodul und auf ein Uhrzeitmodul bereitzustellen, das gegenüber vorstehend beschriebenen Kommunikationsagenteneinheiten eine Verbesserung der Kommunikationsbedingungen ermöglicht.

Diese Aufgabe löst die Erfindung für eine Kommunikationsagenteneinheit der genannten Art, deren Prozessorsteuerung das Kommunikationsverhalten eines Teilnehmers, dem die Kommunikationsagenteneinheit zugeordnet ist, auf Regelmäßigkeiten beobachtet. Die Kommunikationsagenteneinheit erfaßt zu verschiedenen Zeitpunkten Kommunikationsparameter, die während des von diesem Teilnehmer durchgeführten Rufs auftreten. Darüber hinaus dient die Prozessorsteuerung zum Prüfen, ob durch Änderung von vom Teilnehmer festlegbaren Kommunikationsparametern eine Verbesserung der Kommunikationsbedingungen erreichbar ist und falls eine Regelmäßigkeit erkannt wurde sowie eine Verbesserung erreichbar ist, zum Mitteilen der erforderlichen Parameteränderungsmaßnahmen an den Teilnehmer, mit denen diese Verbesserung erreichbar sind. Diese Mitteilung an den Teilnehmer erfolgt üblicherweise über eine Mensch-Maschine-Schnittstelle in Form einer akustischen Ansage oder einer optischen Anzeige.

Eine erfindungsgemäße Kommunikationsagenteneinheit hat Zugriffsmöglichkeit auf ein Gebührenberechnungsmodul und auf ein Uhrzeitmodul. Dieses Gebührenberechnungsmodul und das Uhrzeitmodul müssen hierbei nicht zwangsläufig Teil der Kommunikationsagenteneinheit sein. Es genügt, wenn die Kommunikationsagenteneinheit mit Hilfe solcher Module die genaue Zeit erfassen bzw. die Ergebnisse von Gebührenberechnungsvorgängen erfassen und eventuell solche Gebührenberechnungsvorgänge veranlassen kann.

Das Uhrzeitmodul kann in einer günstigen Ausgestaltungsform einer Kommunikationsagenteneinheit als Uhrzeit-/Kalendermodul ausgestaltet sein, das neben dem Berücksichtigen einer Uhrzeit auch das Berücksichtigen von Zeiträumen beim Feststellen von Regelmäßigkeiten ermöglicht.

Eine Kommunikationsagenteneinheit ist im allgemeinen einem Teilnehmer fest zugeordnet. Dies kann beispielsweise bedeuten, daß eine einzige aus Hardware und Software bestehende Kommunikationsagenteneinheit nur einem Teilnehmer zur Verfügung steht. Eine solche Kommunikationsagenteneinheit kann eine selbständige Einheit darstellen, die bedarfsweise an ein Kommunikationsendgerät eines Teilnehmers anschließbar ist. Sie kann aber auch Teil eines Kommunikationsendgerätes eines Teilnehmers sein.

Eine Ausgestaltungsform einer Kommunikationsagenteneinheit kann vorsehen, daß ein Teilnehmer von mehreren, ihm zugeordneten Endgeräten aus auf dieselbe Kommunikationsagenteneinheit zugreifen kann, daß also eine Kommunikationsagenteneinheit mehreren Endgeräten eines Teilnehmers zugeordnet ist. Wenn eine Kommunikationsagenteneinheit mehreren Endgeräten eines Teilnehmers zur Verfügung steht, so kann dies jeweils durch räumliche Anordnung dieser Kommunikationsagenteneinheit an unterschiedlichen Endgeräten den Teilnehmers geschehen. Es ist aber auch ein Zugriff von Endgeräten über ein Kommunikationsnetz bzw. Datennetz auf eine Kommunikationsagenteneinheit des Teilnehmers möglich.

Eine andere Realisierungsform einer Kommunikationsagenteneinheit sieht vor, daß eine einzige Hardwareanordnung zum Realisieren mehrerer, unterschiedlichen Teilnehmern zugeordneten Kommunikationsagenteneinheiten vorgesehen ist. Eine solche Kommunikationsagenteneinheit kann beispielsweise als zentrale Einrichtung innerhalb eines Bereiches eines Kommunikationsnetzes oder Datennetzes vorgesehen und mehreren oder allen Teilnehmern bzw. Endgeräten in diesem Bereich des Kommunikations- bzw. Datennetzes zugeordnet sein. Hierbei ist zumindest ein ggf. vorgesehenes Kommunikationspartner-Verzeichnismodul sowie eine Datenbasis jedem Teilnehmer mit einer Kommunikationsagenteneinheit individuell zugeordnet, wobei in der Datenbasis Kommunikationsparameter gespeichert sind, die zum Erkennen von Regelmäßigkeiten im Kommunikationsverhalten herangezogen werden.

Einzelne Softwaremodule können ebenfalls gemeinsam nutzbar sein. In einem solchen Fall wird beispielsweise beim Einrichten einer Kommunikationsagenteneinheit für einen Teilnehmer oder beim Aktivieren einer Kommunikationsagenteneinheit für einen Teilnehmer eine Programminstanz eines gemeinsamen Programms bzw. einer gemeinsamen Anzahl von Programmodulen instanziiert, wobei diese Programminstanz gemeinsam mit der Hardware eine diesem Teilnehmer zugeordnete Kommunikationsagenteneinheit darstellt. Informationsressourcen, auf die eine Kommunikationsagenteneinheit zugreift, wie zum Beispiel ein Gebührenberechnungsmodul, ein Uhrzeitmodul und ein Kommunikationspartner-Verzeichnismodul können, unabhängig von der Realisierungsart einer Kommunikationsagenteneinheit, zentral in einem Kommunikationsnetz bzw. Datennetz realisiert werden, so daß Kommunikationsagenteneinheiten jeweils auf diese zentralen Informationsressourcen zugreifen können.

Zu den von der Kommunikationsagenteneinheit erfaßbaren Kommunikationsparametern kann beispielsweise mindestens ein Teil der Adresse eines gerufenen Teilnehmers bzw. die gesamte Adresse des gerufenen Teilnehmers gehören sowie der Zeitpunkt des Beginns eines abgehenden Rufes und/oder die Dauer eines abgehenden Rufes. Außerdem kann die vom rufenden Teilnehmer gewählte Verbindungsqualität, wie zum Beispiel Standbild oder Bewegtbild bei Bildtelefonie, 7 kHz- oder 3 kHz-Telefonie, oder eine ggf. niedrige, derzeit z.B. mit Hilfe von Telefonie-über-Internetprotokoll erreichbare Qualität, ein solcher von der Kommunikationsagenteneinheit erfaßbarer Kommunikationsparameter sein. Die Qualität einer Telefonie-über-Internetprotokoll-Verbindung ist hierbei zur Zeit insbesondere bezüglich der Zuverlässigkeit der Verbindung geringer als die einer Telefonwählnetzverbindung.

Die vom Teilnehmer, dem eine erfindungsgemäße Kommunikationsagenteneinheit zugeordnet ist, festlegbaren Kommunikationsparameter können beispielsweise sein:
Der Kommunikationstyp, wie zum Beispiel Bewegtbild mit Audio, Standbild mit Audio, E-Mail oder eine reine Audioverbindung beziehungsweise Faxverbindung;
der durch Adreßauswahl festlegbare Endgerätetyp des gerufenen Kommunikationspartners, wie zum Beispiel Mobilfunktelefon, Telefonnetzendgerät oder Internetprotokollnetzendgerät;
der Zeitpunkt des Beginns, die Dauer oder der Zeitpunkt des Beendens einer Verbindung;
die gewünschte, durch die Art der Verbindung festgelegte Kommunikationsart wie zum Beispiel PSTN- oder ISDN-Wählnetzverbindung, Telefonie-über-Internetprotokoll-LAN-Verbindung;
die Dienstequalität wie z.B. die gewünschte Audio-Bandbreite, das gewünschte Sprach-Codec, die gewünschte Bildwechselhäufigkeit bei langsam bewegtem Video; außerdem
ein unter bestimmten Randbedingungen vom Teilnehmer gewählter Diensteanbieter.

Das Gebührenberechnungsmodul, auf das eine erfindungsgemäße Kommunikationsagenteneinheit zugreift, berücksichtigt in einer bevorzugten Ausgestaltung der Erfindung beim Berechnen von Gebühren die Gebührensätze unterschiedlicher Diensteanbieter. Außerdem kann das Gebührenberechnungsmodul beim Berechnen von Gebühren die Gebührenformeln für unterschiedliche Kommunikationsarten berücksichtigen, wie z.B. die Kommunikationstypen Bildtelefonie oder Audiotelefonie, oder Verbindungsqualitäten, wie zum Beispiel schmalbandige oder breitbandige Audiotelefonie bzw. Video-Telefonie mit niedriger oder hoher Bildwiederholrate.

Falls die Kommunikationsagenteneinheit beispielsweise zu verschiedenen Zeitpunkten beobachtet hat, daß der Teilnehmer zu einem bestimmten Kommunikationspartner regelmäßig unter Einbeziehen eines bestimmten Diensteanbieters eine länger andauernde Kommunikationsverbindung aufbaut und falls sie zusätzlich feststellt, daß bei Wahl eines für länger andauernde Gespräche günstigeren Diensteanbieters eine Gebührenverringerung erzielbar wäre, weist eine Ausführungsform der erfindungsgemäßen Kommunikationsagenteneinheit, die auf ein solches Gebührenberechnungsmodul zurückgreift, den Teilnehmer darauf hin, daß ein Ändern des Diensteanbieters eine Verbesserung der Kommunikationsbedingungen ermöglichen würde. Ein solcher Hinweis kann beispielsweise nach Beendigen eines von mehreren Kommunikationsvorgängen mit dem entsprechenden Kommunikationspartner erfolgen oder nach Veranlassen eines Kommunikationsaufbaus zu diesem Kommunikationspartner durch den Teilnehmer, jedoch noch vor dem Ausführen eines solchen Kommunikationsaufbaus. In diesem Falle sind die von der Kommunikationsagenteneinheit zu verschiedenen Zeitpunkten beobachteten Kommunikationsparameter beispielsweise die Adresse des Kommunikationspartners, die regelmäßig auftretende Dauer eines Kommunikationsvorgangs mit diesem Kommunikationspartner und der gewählte Diensteanbieter. Die erforderliche Parameteränderungsmaßnahme, die dem Teilnehmer mitzuteilen ist, ist hier das Wählen des günstigeren Diensteanbieters. Die erreichbare Verbesserung der Kommunikationsbedingungen ist in diesem Fall die geringere, bei länger andauernden Kommunikationsverbindungen zu zahlende Gebühr.

In einer günstigen Ausgestaltungsform einer Kommunikationsagenteneinheit berücksichtigt die Prozessorsteuerung beim Beobachten des Kommunikationsverhaltens des Teilnehmers nicht nur die gewählte Endgeräteadresse eines Kommunikationspartners, sondern überprüft auch mit Hilfe eines Zugriffs auf das Kommunikationspartner-Verzeichnismodul, ob unterschiedliche Endgeräteadressen demselben Kommunikationspartner zugeordnet sind.

Eine weiterentwickelte Kommunikationsagenteneinheit nach der Erfindung teilt dem Teilnehmer zusätzlich zu einer erforderlichen Paramteränderungsmaßnahme auch die durch eine solche Änderungsmaßnahme bedingten Kommunikationsparameteränderungen mit. Solche Kommunikationsparameteränderungen können neben der bewirkten Verbesserung gegebenenfalls auch Einschränkungen sein. Wenn beispielsweise eine nur kurze Zeit dauernde Audioverbindung nur geringfügig geringere Kosten verursachen würde als eine entsprechende Videoverbindung, könnte eine mitgeteilte Parameteränderungsmaßnahme das Wählen einer Videoverbindung sein. Die erreichbare Verbesserung wäre hierbei eine höhere Kommunikationsqualität durch die Videoverbindung. Die durch die Parameteränderungsmaßnahmen bedingte Kommunikationsparameteränderung wären aber auch geringfügig höhere Gebühren. Vorzugsweise würde in einem solchen Beispielfall auch die maximale Verbindungsdauer, während der die kostengünstige Videoverbindung erzielbar wäre, mitzuteilen.

Erreichbare Verbesserungen der Kommunikationsbedingungen können beispielsweise neben den bereits erwähnten geringeren Kommunikationskosten und der Verwendung eines höherwertigen Kommunikationsdienstes auch das Erreichen einer besseren Übertragungsqualität sein. So kann beispielsweise, insbesondere bei Kurzstreckenverbindungen, eine über ein ISDN-Netz geführte Verbindung trotz höherer Übertragungsqualität gleich hohe oder nur geringfügig höhere Gebühren verursachen, als eine gleich lang aufrechterhaltene Verbindung über ein Internetprotokollnetz mit geringerer Übertragungsqualität. Außerdem kann die erreichbare Verbesserung eine höhere Bildwiederholrate bei Verwendung einer höherwertigen Videoverbindungsart sein.

Dem Teilnehmer mitzuteilende erforderliche Parameteränderungsmaßnahmen können beispielsweise das Wählen eines anderen Diensteanbieters, das Ausführen eines Rufs zu einem anderen Zeitpunkt oder das Wählen einer anderen Kommunikationsart sein.

Nachstehend wird die Erfindung anhand von Fallbeispielen und Ausgestaltungsformen von Kommunikationsagenteneinheiten unter Bezugnahme auf die Figuren näher erläutert.

Es zeigt
- Figur 1: eine Ausgestaltungsform einer Kommunikationsagenteneinheit in schematischer Blockdarstellung;
- Figur 2: in schematischer Blockdarstellung eine erste Art einer Kommunikationsagenteneinheit, mit einem rufenden Endgerät und einem Netz; und
- Figur 3: in schematischer Blockdarstellung eine zweite Art einer Kommunikationsagenteneinheit, mit einem rufenden Endgerät und einem Netz.

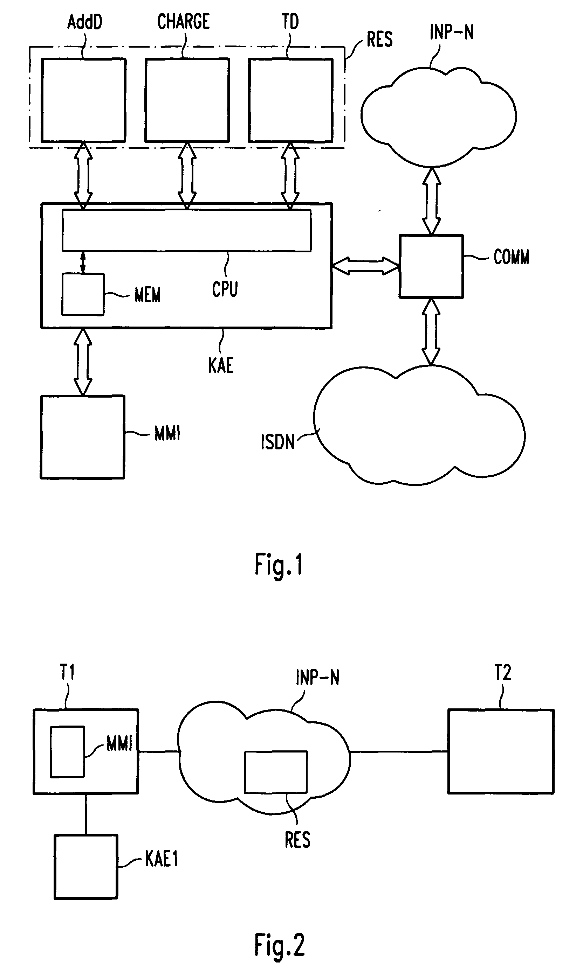

Figur 1 zeigt in schematischer Blockdarstellung eine Ausgestaltungsform einer erfindungsgemäßen Kommunikationsagenteneinheit KAE mit einer Prozessorsteuerung CPU und einem Speicher MEM. Die gezeigte Kommunikationsagenteneinheit KAE greift auf Informationsresourcen RES zu, zu denen unter anderem ein Kommunikationspartner-Verzeichnismodul AddD, ein Gebührenberechnungsmodul CHARGE und ein Uhrzeitmodul TD gehören. Außerdem greift die Kommunikationsagenteneinheit KAE auf eine Mensch-Maschine-Schnittstelle MMI zu. Diese Mensch-Maschine-Schnittstelle MMI kann beispielsweise ein Sprachausgabemodul mit Elektroakustikwandler oder ein Textausgabemodul mit einer Anzeigeeinrichtung sein (in der Figur nicht dargestellt). Der Speicher MEM dient der Prozessorsteuerung unter anderem zum Speichern von erfaßten Kommunikationsparametern, die zum Ermitteln ggf. vorliegender Regelmäßigkeiten im Kommunikationsverhalten benötigt werden oder zum Speichern von festgestellten Regelmäßigkeiten im Kommunikationsverhalten. Solche Kommunikationsparameter sind vorzugsweise in Form einer Datenbasis abgespeichert. Hierbei empfielt sich die Verwendung einer Datenbasis auf der Grundlage eines persönlichen, spezifischen Kommunikationspartner-Verzeichnisses.

Die in Figur 1 dargestellte Kommunikationsagenteneinheit KAE hat außerdem Zugriff auf ein Kommunikationsmodul COMM, das dem Teilnehmer, dem auch die Kommunikationsagenteneinheit KAE zugeordnet ist, beispielsweise mit Hilfe eines Kommunikationsendgerät zuzuordnen ist. Dieses Kommunikationsmodul COMM ist im dargestellten Beispiel an ein Datennetz LAN und außerdem an ein ISDN-Kommunikationsnetz anschließbar.

Die in Figur 1 gezeigte Kommunikationsagenteneinheit KAE ist, wie erwähnt, einem Teilnehmer zugeordnet, zu dem auch das Kommunikationsmodul COMM gehört. Das Kommunikationsmodul COMM ist in diesem Beispiel als eine Netzübergangseinheit ausgeführt, beispielsweise ein Modem oder eine Netzzugangskarte eines in Figur 1 nicht dargestellten Kommunikationsendgerätes. Durch den Zugriff auf das Kommunikationsmodul COMM kann die Prozessorsteuerung CPU der Kommunikationsagenteneinheit KAE das Kommunikationsverhalten des Teilnehmers beobachten und Kommunikationsparameter von Kommunikationsvorgängen dieses Teilnehmers erfassen und auswerten. Durch den Zugriff auf die Informationsresourcen RES kann die Prozessorsteuerung CPU anhand der erfaßten Kommunikationsparameter einzelner Kommunikationsvorgänge des Teilnehmers die Kommunikationsbedingungen je Kommunikationsvorgang ermitteln. Der Zugriff auf die Informationsresourcen RES ermöglicht der Prozessorsteuerung CPU außerdem die Überprüfung, ob durch Änderung von durch den Teilnehmer festlegbaren Kommunikationsparametern eine Verbesserung der Kommunikationsbedingungen eines Kommunikationsvorgangs erreichbar ist.

Die Prozessorsteuerung CPU ermittelt durch Vergleichen der von der Kommunikationsagenteneinheit KAE bei mehreren Kommunikationsvorgängen eines Teilnehmers erfaßten Kommunikationsparametern, ob der Teilnehmer gewisse Verhaltensregelmäßigkeiten hat. Falls die Kommunikationsagenteneinheit KAE eine solche Regelmäßigkeit im Verhalten eines Teilnehmers feststellt und außerdem unter Berücksichtigung dieser Regelmäßigkeit ermittelt, daß eine Verbesserung der Kommunikationsbedingungen durch das Ändern der vom Teilnehmer festlegbaren Kommunikationsparametern möglich ist, teilt die Prozessorsteuerung CPU der Kommunikationsagenteneinheit KAE dem Teilnehmer über die Mensch-Maschine-Schnittstelle MMI die erforderlichen Änderungsmaßnahmen für die Kommunikationsparameter mit.

Figur 2 zeigt in einer schematischen Blockdarstellung eine erste Realisierungsart der Kommunikationsagenteneinheit KAE nach Figur 1. Die dargestellte Kommunikationsagenteneinheit KAE1 ist hierbei einem rufenden Endgerät T1 und somit einem Teilnehmer unmittelbar körperlich zugeordnet und über dieses Endgerät T1 an ein Internet-Protokoll-Netz INP-N angeschlossen. In dem Internet-Protokoll-Netz INP-N werden Informationsresourcen RES bereitgestellt, auf die die Kommunikationsagenteneinheit KAE1 zugreifen kann. Die Mensch-Maschine-Schnittstelle MMI zum Ausgeben von Mitteilungen von der Kommunikationsagenteneinheit KAE1 an den Teilnehmer ist in dem Endgerät T1 enthalten.

In Figur 2 ist nur eine Verbindung vom Endgerät T1 zu dem Internet-Protokoll-Netz INP-N dargestellt. Selbstverständlich können aber auch noch Verbindungsmöglichkeiten beispielsweise zu Telefon-Netzen oder Mobilfunknetzen bestehen.

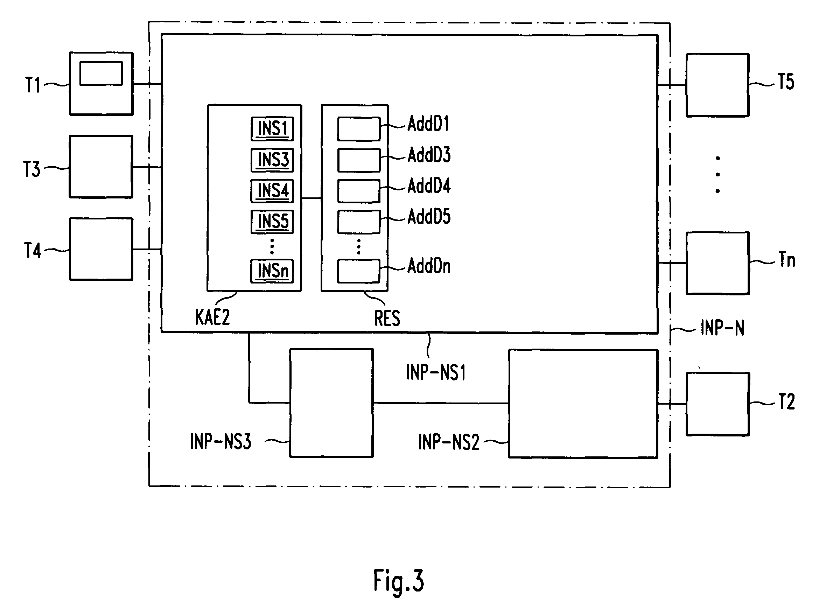

Figur 3 zeigt in Blockdarstellung eine zweite Realisierungsart der Kommunikationsagenteneinheit KAE. Die dargestellte Kommunikationsagenteneinheit KAE2 ist mehreren an einem Internet-Protokoll-Subnetz INP-NS1 angeschlossen Endgeräten T1, T3, T4, T5, Tn örtlich zugeordnet. Wenn die Kommunikationsagenteneinheit KAE2 für ein Endgerät T1, T3, T4, T5, Tn aktiviert wird, instanziiert sie für dieses Endgerät T1, T3, T4, T5, Tn jeweils eine Steuerung INS1, INS3, INS4, INS5, INSn, die dem jeweiligen Endgerät T1, T3, T4, T5, Tn und somit seinem Teilnehmer fest zugeordnet ist. In dem Internet-Protokoll-Subnetz INP-NS1 werden Verbindungsabläufe von einer Netzsteuerung NC gesteuert. Informationsresourcen RES, auf die die Kommunikationsagenteneinheit KAE2 zugreifen kann, werden in dem Internet-Protokoll-Subnetz INP-NS1 bereitgestellt. Zu diesen Informationsresourcen RES gehören in dem gezeigten Ausführungsbeispiel für jeden Teilnehmer, dem die Kommunikationsagenteneinheit KAE2 zugeordnet werden kann, ein Kommunikationspartner-Verzeichnismodul AddD1, AddD3, AddD4, AddD5, AddDn mit spezifischen Daten von Kommunikationspartnern, z.B. Adressen, Kommunikationsparametern etc. Das Internet-Protokoll-Subnetz INP-NS1 bildet gemeinsam mit weiteren Internet-Protokoll-Subnetzen INP-NS2, INP-NS3 ein Internet-Protokoll-Netz INP-N mit weiteren anschließbaren Endgeräten T2.

Nachfolgend wird die Erfindung anhand verschiedener praktischer Anwendungsbeispiele beschrieben. Bei einem ersten Beispiel führt der Teilnehmer, dem die Kommunikationsagenteneinheit KAE zugeordnet ist, regelmäßig abgehende Rufe, z.B. Telephongespräche, zu einem bestimmten Teilnehmer innerhalb einer Tageszeitzone mit erhöhten Gebühren pro Zeiteinheit, wobei diese Tageszeitzone an eine Zeitzone mit verringerten Gebühren pro Zeiteinheit angrenzt. Der Teilnehmer, dem die Kommunikationsagenteneinheit KAE zugeordnet ist, führt also beispielsweise regelmäßig Telefonate von 10 Minuten bis 30 Minuten Dauer zwischen 8.50 Uhr und 9.30 Uhr, wobei die Gebühren pro Zeiteinheit bei dem gewählten Diensteanbieter vor 9.00 Uhr erheblich geringer sind als nach 9.00 Uhr.

Die Prozessorsteuerung CPU erfaßt bei mehreren, zu verschiedenen Zeitpunkten durchgeführten Kommunikationsvorgängen abgehende Rufe zu einem bestimmten Teilnehmer anhand der Rufadresse des Teilnehmers. Mit Hilfe eines Uhrzeitmoduls TD erfaßt die Prozessorsteuerung CPU außerdem den jeweiligen Zeitpunkt und die jeweilige Dauer dieser Kommunikationsvorgänge. Mit Hilfe eines Gebührenberechnungsmoduls CHARGE berechnet die Kommunikationsagenteneinheit KAE jeweils die tatsächlich anfallenden Gebühren eines jeden Kommunikationsvorganges. Mit Hilfe des Gebührenberechnungsmoduls CHARGE und des Uhrzeitmoduls TD erfaßt die Prozessorsteuerung CPU außerdem, daß die Kommunikationsvorgänge im Übergangsbereich zu einer benachbarten Gebührenzeitzone ausgeführt werden. Die Prozessorsteuerung ermittelt dann mit Hilfe des Gebührenberechnungsmoduls CHARGE zusätzlich zu den tatsächlich anfallenden Gebühren auch die Gebühren, die anfallen würden, wenn der Kommunikationsvorgang vollständig in der Zeitzone mit verringerter Gebührenbelastung ausgeführt worden wäre. Die tatsächlich angefallenen Gebühren werden anschließend mit den innerhalb der billigeren Zeitzone anfallenden Gebühren verglichen. Die Prozessorsteuerung prüft dann, ob durch Verlagern einzelner Kommunikationsvorgänge in die billigere Zeitzone eine merkliche Verbesserung der Kommunikationsbedingungen erreichbar wäre. Hierbei kann jede Art von Verbesserung ermittelt werden. Es ist jedoch auch möglich, einen Schwellwert einer erreichbaren Verbesserung einzugeben, ab der die genannte Überprüfung als positiv bewertet wird. Wenn eine Regelmäßigkeit erkannt worden ist und durch Änderung der vom Teilnehmer festlegbaren Kommunikationsparametern eine Verbesserung der Kommunikationsbedingungen erreichbar ist, teilt die Prozessorsteuerung CPU dem ihr zugeordneten Teilnehmer mit, durch welche Parameteränderungsmaßnahme diese Verbesserung erreichbar ist. Dieses Mitteilen der erforderlichen Parameteränderungsmaßnahmen erfolgt im genannten Beispiel über die Mensch-Maschine-Schnittstelle MMI, zum Beispiel mittels einer Anzeigeeinrichtung oder einer Ansageeinrichtung am Endgerät des Teilnehmers. Die Parameteränderungsmaßnahmen, d.h. einen abgehenden Ruf in eine Zeitzone mit verringerter Gebührenbelastung zu verlagern, erfolgt vorzugsweise unmittelbar nach dem Durchführen eines entsprechenden, regelmäßigen Kommunikationsvorganges.

Die Kommunikationsagenteneinheit KAE kann beim genannten Beispiel zusätzlich mit Hilfe des Gebührenberechnungsmoduls CHARGE ermitteln, ob andere Diensteanbieter günstigere Tarife in verschiedenen Zeitzonen anbieten. Ermittelt die Kommunikationsagenteneinheit KAE, daß ein anderer Diensteanbieter erst um 9.30 Uhr den Gebührensatz anhebt, kann die Kommunikationsagenteneinheit KAE als erforderliche Parameteränderungsmaßnahme auch mitteilen, daß dieser zum genannten Zeitpunkt günstigere Diensteanbieter gewählt werden soll. In diesem Fall ist es empfehlenswert, die erforderliche Parameteränderungsmaßnahme bereits beim Verbindungsaufbau noch vor Festlegen des tatsächlich gewählten Diensteanbieters mitzuteilen, um dem rufenden Teilnehmer die Wahl des günstigsten Diensteanbieters zu ermöglichen.

Falls die Prozessorsteuerung CPU der Kommunikationsagenteneinheit KAE beim vorstehend beschriebenen Beispiel auf ein Kommunikationspartner-Verzeichnismodul AddD zugreifen kann, das für einen Kommunikationspartner mehrere Kommunikationsadressen verzeichnet hat, so kann ein regelmäßiger Rufaufbau zu diesem Teilnehmer auch erfaßt werden, wenn unterschiedliche Kommunikationsadressen dieses Teilnehmers verwendet werden.

Ein anderes Anwendungsbeispiel sieht vor, daß der Teilnehmer, dem die Kommunikationsagenteneinheit KAE zugeordnet ist, regelmäßig längere interkontinentale Kommunikationsvorgänge mit Kommunikationspartnern in einer Landesgesellschaft seines Unternehmens ausführt. Mit Hilfe eines Kommunikationspartner-Verzeichnismoduls AddD erkennt die Prozessorsteuerung CPU, daß es sich bei den Kommunikationsvorgängen jeweils um firmeninterne Rufe handelt und daß die entsprechenden Kommunikationspartner sowohl über ein vermittlungsorientiertes Kommunikationsnetz als auch über ein Internet-Protokoll-Netz erreichbar sind. Der rufende Teilnehmer, dem die Kommunikationsagenteneinheit KAE zugeordnet ist, führt die genannten Kommunikationsvorgänge üblicherweise über das vermittlungsorientierte Kommunikationsnetz durch.

Die Prozessorsteuerung CPU erkennt anhand eines Abschnittes oder Teiles der Adressen der jeweiligen Kommunikationspartner mit Hilfe des Kommunikationspartner-Verzeichnismoduls AddD, daß die Rufe alle an einen gemeinsamen Hauptanschluß gehen und daß mindestens ein Teil der Kommunikationspartner auch mit Hilfe von Telefonverbindung über das Internet-Protokoll erreichbar sind. Die beobachtete Regelmäßigkeit ist in diesem Fall das regelmäßige Ausführen von Rufen zu einer zusammengehörenden Teilnehmergruppe unter Verwendung eines verbindungsorientierten Kommunikationsnetzes. Die Prozessorsteuerung CPU der Kommunikationsagenteneinheit KAE berechnet jeweils sowohl die tatsächlich anfallenden Kommunikationsgebühren als auch die beim Ausführen eines Kommunikationsvorganges mit Hilfe von Telefonie mit Internet-Protokoll über ein Internet-Protokoll-Netz anfallenden Gebühren. Ein Vergleich der Gebühren führt dazu, daß die Verwendung von Telefonie über Internet-Protokoll eine erhebliche Gebührenverringerung mit sich bringen würde. Die Prozessorsteuerung CPU teilt dem rufenden Teilnehmer mit, daß durch Wählen der Kommunikationsart "Telefonie über Internet-Protokoll" eine Verringerung der Gebührenlast möglich ist. Die Prozessorsteuerung CPU kann z.B. zusätzlich mitteilen, daß das Wählen der anderen Kommunikationsart eine Verringerung der Kommunikationsqualität mit sich bringen kann.

Die Prozessorsteuerung CPU der Kommunikationsagenteneinheit KAE kann auch veranlassen, daß bei regelmäßigen firmeninternen Kommunikationsvorgängen, bei denen eine Gebührenersparnis durch Verwenden der Kommunikationsart "Telefonie über Internet-Protokoll" erreichbar ist, die entsprechende Parameteränderungsmaßnahme an den Teilnehmer übermittelt wird.

## Patentansprüche

1. Kommunikationsagenteneinheit (KAE, KAE1, KAE2) mit Zugriffsmöglichkeit auf ein Gebührenberechnungsmodul (CHARGE)und ein Uhrzeitmodul (TD) , wobei die Kommunikationsagenteneinheit (KAE, KAE1, KAE2) eine Prozessorsteuerung (CPU) hat,
die das Kommunikationsverhalten eines Teilnehmers, dem die Kommunikationsagenteneinheit (KAE, KAE1, KAE2) zugeordnet ist, beobachtet und Regelmäßigkeiten durch Vergleichen von von der Kommunikationsagenteneinheit (KAE, KAE1, KAE2) erfaßbaren, zu verschiedenen Zeitpunkten beobachteten Kommunikationsparametern dieses Teilnehmers erfaßt,
wobei die Prozessorsteuerung (CPU) feststellt, ob durch Änderung von vom Teilnehmer festlegbaren Kommunikationsparametern eine Verbesserung der Kommunikationsbedingungen erreichbar ist und, falls eine Regelmäßigkeit erkannt worden ist sowie eine Verbesserung erreichbar ist,
die erforderlichen Parameteränderungsmaßnahmen zum Erreichen dieser Verbesserung dem Teilnehmer mitteilt.

2. Kommunikationsagenteneinheit nach Anspruch 1, dadurch gekennzeichnet, daß als ein von der Kommunikationsagenteneinheit (KAE, KAE1, KAE2) erfaßbarer Kommunikationsparametern mindestens ein Teil der Adresse eines gerufenen Teilnehmers verwendet wird.

3. Kommunikationsagenteneinheit nach einem der vorhergehenden Ansprüche, dadurch gekennzeichnet, daß als ein von der Kommunikationsagenteneinheit (KAE, KAE1, KAE2) erfaßbarer Kommunikationsparameter der Zeitpunkt des Beginns eines abgehenden Rufs verwendet wird.

4. Kommunikationsagenteneinheit nach einem der vorhergehenden Ansprüche, dadurch gekennzeichnet, daß als ein von der Kommunikationsagenteneinheit (KAE, KAE1, KAE2) erfaßbarer Kommunikationsparameter die Dauer eines abgehenden Rufes vorgesehen ist.

5. Kommunikationsagenteneinheit nach einem der vorhergehenden Ansprüche, dadurch gekennzeichnet, daß als von der Kommunikationsagenteneinheit (KAE, KAE1, KAE2) erfaßbarer Kommunikationsparameter der Kommunikationstyp, die Kommunikationsart oder die vom zugeordneten Teilnehmer gewählte Verbindungsqualität vorgesehen ist.

6. Kommunikationsagenteneinheit nach einem der vorhergehenden Ansprüche,
dadurch gekennzeichnet,
daß das Gebührenberechnungsmodul (CHARGE) zum Berechnen von Gebühren unter Berücksichtigung unterschiedlicher Diensteanbieter durch Einbeziehen der Gebühren dieser unterschiedlichen Diensteanbieter verwendet wird.

7. Kommunikationsagenteneinheit nach einem der vorhergehenden Ansprüche, dadurch gekennzeichnet,
daß das Gebührenberechnungsmodul (CHARGE) zum Berechnen von Gebühren unter Berücksichtigung verschiedener Kommunikationsarten verwendet wird.

8. Kommunikationsagenteneinheit nach einem der vorhergehenden Ansprüche, dadurch gekennzeichnet,
daß das Gebührenberechnungsmodul (CHARGE) zum Berechnen von Gebühren unter Berücksichtigung verschiedener Verbindungsqualitäten verwendet wird.

9. Kommunikationsagenteneinheit nach einem der vorhergehenden Ansprüche, dadurch gekennzeichnet,
daß die Prozessorsteuerung (CPU) zusätzlich zu einer Parameteränderungsmaßnahme die durch diese Parameteränderungsmaßnahme bedingten Kommunikationsparameteränderungen mitteilt.

10. Kommunikationsagenteneinheit nach einem der vorhergehenden Ansprüche, dadurch gekennzeichnet,
daß die erreichbare Verbesserung der Kommunikationsbedingungen verringerte Kommunikationskosten sind.

11. Kommunikationsagenteneinheit nach einem der vorhergehenden Ansprüche, dadurch gekennzeichnet,
daß die erreichbare Verbesserung der Kommunikationsbedingungen eine verbesserte Übertragungsqualität ist.

12. Kommunikationsagenteneinheit nach einem der vorhergehenden Ansprüche, dadurch gekennzeichnet,
daß die erreichbare Verbesserung der Kommunikationsbedingungen die Verwendung eines höherwertigen Kommunikationsdienstes ist.

13. Kommunikationsagenteneinheit nach einem der vorhergehenden Ansprüche, dadurch gekennzeichnet,
daß die erforderliche Parameteränderungsmaßnahme das Ausführen eines Rufs zu einem anderen Zeitpunkt ist.

14. Kommunikationsagenteneinheit nach einem der Ansprüche 1 bis 13, dadurch gekennzeichnet,
daß die erforderliche Parameteränderungsmaßnahme das Wählen einer anderen Kommunikationsart ist.

15. Kommunikationsagenteneinheit nach einem der vorhergehenden Ansprüche, gekennzeichnet durch eine Zugriffsmöglichkeit auf ein Kommunikationspartner-Verzeichnismodul (AddD).
